# FASCICULE DE BREVET EUROPEEN

(11) **EP 2 146 568 B1**
(45) Date de publication et mention de la délivrance du brevet: **16.09.2015**
(21) Numéro de dépôt: 08787933.4
(22) Date de dépôt: 10.04.2008
(51) Int. Cl.: A01K 11/00

(54) **BOUCLE AURICULAIRE RENFORCÉE**
VERSTÄRKTE OHRMARKE
REINFORCED EAR TAG

(30) Priorité: 13.04.2007 FR 0702687
(43) Date de publication de la demande: 27.01.2010
(73) Titulaire: Allflex Europe Sas, 35502 Vitré Cedex (FR)
(72) Inventeur: HILPERT, Jean-Jacques, F-35500 Vitré (FR)
(74) Mandataire: Hamann, Jean-Christophe
(86) Numéro de dépôt international: PCT/FR2008/000498
(87) Numéro de publication internationale: WO 2008/142277

(56) Documents cités:
- EP-A- 0 056 533
- WO-A-99/29167
- FR-A- 2 550 915
- GB-A- 2 139 156

## Description

La présente invention concerne une boucle de marquage et d'identification du bétail et autres animaux, du type destiné à être fixée sur une des oreilles de l'animal.

Elle a pour objet une boucle auriculaire du type associant une partie mâle et une partie femelle comprenant une étiquette fixée à un bouton par un oeillet, dans laquelle le bouton est doté d'éléments de renfort de manière que l'étiquette ne puisse être dissociée du bouton au niveau de l'oeillet par un instrument tranchant, sans laisser des traces apparentes témoignant d'une tentative de falsification de l'étiquette.

L'identification des animaux d'élevage a été rendue obligatoire dans de nombreux pays pour assurer le suivi sanitaire du cheptel et garantir l'origine et la qualité de la viande proposée aux consommateurs. La marque comporte généralement un numéro d'identification inscrit sur une étiquette qui est fixée à l'oreille de l'animal, ce qui permet de le suivre tout au long de son existence. La crise due à la maladie de la vache folle a accrue l'importance de garantir l'efficacité et la fiabilité du système de marquage employé.

Les marques auriculaires en matière plastique sont actuellement les plus utilisées. Elles comprennent une boucle de fixation portant une étiquette sur laquelle sont mentionnées toutes les données légales, cette boucle constituant la partie femelle de la marque et coopérant avec une partie mâle pour verrouiller le tout, sur laquelle est également inscrit le numéro d'identification. Elles sont conçues pour être posées de manière irréversible, à l'aide d'un système de fixation inviolable, par exemple un bouton de réception associé à un poinçon par emboitement irréversible. Les étiquettes sont dotées de marquages conventionnels et indélébiles. De nombreuses variantes ont été proposées, visant à améliorer la solidité et l'inviolabilité du système de fixation de la boucle.

L'une des plus efficaces est réalisée à l'aide d'une boucle dont la partie femelle est formée de trois pièces : un chapeau nommé ainsi à cause de sa forme, un ressort et une étiquette. L'étiquette comporte un oeillet à travers lequel passe le cylindre du chapeau, tandis que la collerette à la base du chapeau forme une base élargie qui vient en butée contre les bords de la bague. La collerette du chapeau et l'étiquette sont joints par collage, soudage, ou autre technique connue permettant de les associer de manière inamovible. Le ressort, placé sous le chapeau reçoit la partie mâle, en verrouillant ainsi l'ensemble sur l'oreille de l'animal.

Une boucle auriculaire de ce type est décrite dans WO 99/29167 qui, pour améliorer la résistance du dispositif prévoit d'inclure des fibres de verre dans le matériaux plastique constituant le chapeau.

Bien que ce type de système, ou d'autres du même type, soit pourvu de nombreux éléments de sécurité, on a signalé qu'il était encore possible aux fraudeurs de falsifier les étiquettes. En effet, il a été constaté qu'en découpant le chapeau à l'aide d'un outil tranchant, de façon à décoller la bague de l'étiquette et à détacher la collerette tout autour du cylindre, il était possible de retirer l'étiquette de la boucle puis de la replacer après l'avoir modifiée, sans que l'incision ne laisse de trace attirant l'attention de l'éleveur.

Il est donc apparu indispensable de proposer une nouvelle forme d'étiquette auriculaire, permettant de répondre à ce risque sans nuire à la facilité de pose ni augmenter les coûts de fabrication. Une des difficultés rencontrées réside dans la nécessité de pouvoir contrôler visuellement l'état du bouton, afin de s'assurer qu'il n'est ni abîmé, ni altéré. Ce dernier cas est particulièrement important s'il faut effectuer une expertise pour détecter une tentative de fraude. Les boutons connus ne répondent pas à cet impératif.

En outre, la résistance mécanique de l'assemblage des éléments ne doit pas pâtir de la solution adoptée, afin de pouvoir garantir que la boucle ne peut être mise à mal lors d'une utilisation normale souvent agressive, par exemple du fait du frottements sur la végétation pouvant conduire à l'arrachement de l'étiquette.
La présente invention vise à obvier aux inconvénients ci-dessus, en permettant de réaliser des boucles de taille réduite et d'une grande solidité, empêchant toute fraude sans en compliquer la fabrication, ni l'utilisation.

Plus précisément, la présente invention a pour objet une boucle auriculaire de marquage et d'identification du bétail, du type associant une partie mâle et une partie femelle, celle-ci comprenant une étiquette et un bouton essentiellement cylindrique ou tronconique qui est assujetti à un oeillet ménagé dans l'étiquette de sorte que la base du bouton est en butée sur la bordure de l'oeillet, les surfaces en contact adoptant une forme complémentaire, ladite boucle étant caractérisée en ce que la base du bouton comporte au moins une nervure de renfort.

La partie mâle peut coopérer avec la partie femelle selon un mode quelconque connu de la technique, par exemple grâce à un poinçon pénétrant dans la cavité centrale d'un bouton de réception. Une pièce faisant office de ressort peut être prévue sous le bouton pour faciliter la pénétration et le blocage du poinçon.

L'étiquette est généralement une plaquette sur laquelle sont mentionnées toutes les données légales par impression, gravure, code barre ou autre moyen connu de l'homme de l'art. De manière connue également, elle comporte un percement ou oeillet, recevant le bouton.

Le bouton adopte une forme essentiellement cylindrique ou tronconique, sa base pouvant être plus large que son sommet, ce qui facilite l'insertion du bouton dans l'oeillet de l'étiquette jusqu'à une position de butée avant fixation. La base du bouton peut en outre dans certain modèles, comporter une collerette circulaire perpendiculaire à l'axe du bouton, sur laquelle l'oeillet peut venir aussi en butée. Le bouton est assujetti à l'oeillet ménagé dans l'étiquette de sorte que la base du bouton est en butée sur la bordure de l'oeillet, au niveau de la partie la plus large de la base du bouton, ou bien au niveau de la collerette. Dans tous les cas, il est recommandé que les surfaces placées en vis-à-vis adoptent une forme complémentaire favorisant leur contact. En effet, la zone de contact entre l'oeillet et le bouton permet de les fixer ensemble, par exemple par collage ou par soudage par ultrasons. Tout autre moyen d'assemblage, tel le clipsage, peut également être utilisé s'il répond à l'impératif de solidité requis.

Dans la boucle auriculaire selon l'invention, la base du bouton comporte au moins une nervure de renfort. Cette nervure confère un relief à l'interface de contact de l'oeillet et du bouton, qui gène l'insertion d'une lame ou autre instrument tranchant. L'effort à fournir pour vaincre l'aspérité rencontrée par la lame est alors trop important pour qu'elle puisse progresser plus avant par la seule pression manuelle, sauf à l'incliner pour trouver un appui et faire levier, ou à reprendre l'incision en plusieurs fois. Ceci conduit inévitablement à imprimer des traces telles que des éraflures ou des déformations au bouton, ces détériorations étant alors visibles à l'oeil nu. Ladite au moins une nervure peut être fabriquée par une des techniques à la disposition de l'homme de l'art. De manière connue, elle peut être surmoulée ou assemblée par collage ou par soudage par ultrasons.

La nervure de renfort selon l'invention peut adopter des formes et des orientations variées. Elle peut être constituée par un filet circulaire en relief tout autour de la base du bouton. Elle peut au contraire être orientée longitudinalement par rapport à l'axe du bouton c'est-à-dire perpendiculairement au plan de base du bouton. Ainsi, selon une caractéristique particulière de la boucle auriculaire objet de l'invention, ladite au moins une nervure de renfort est disposée longitudinalement par rapport à l'axe du bouton.

Dans un mode de réalisation préféré de la boucle auriculaire selon l'invention, la base du bouton comporte une pluralité de nervures de renfort disposées selon une symétrie de révolution par rapport à l'axe du bouton.

Selon une caractéristique intéressante de l'invention, ladite au moins une nervure a une hauteur inférieure ou égale à l'épaisseur de l'oeillet de l'étiquette. Les nervures sont ainsi placées à l'interface de l'oeillet et du bouton, sans dépasser au-dessus du plan de l'étiquette, de sorte qu'elles sont entièrement intégrées et ne créent aucune aspérité indésirable à la surface de l'étiquette.

Selon une caractéristique préférée de l'invention, ladite au moins une nervure s'étend dans l'épaisseur de l'oeillet de sorte qu'elle affleure en partie au moins à la surface de l'oeillet. La partie affleurant présente avantageusement le même galbe que l'oeillet, de manière à ne créer aucune aspérité indésirable. On comprend aisément que l'oeillet présente au niveau de chaque nervure une fenêtre laissant apparaître celle-ci.

Les nervures sont ainsi partiellement visibles lorsque l'étiquette est en place sur l'oreille de l'animal, et ce d'autant mieux si on a pris soin de les réaliser d'une couleur différente de la teinte de l'étiquette. Il est alors aisé de contrôler le bon état de la boucle d'un simple coup d'oeil. Ainsi, selon une caractéristique avantageuse, ladite au moins une nervure et l'étiquette peuvent être de couleurs différentes.

Dans la boucle auriculaire selon l'invention, le bouton peut comporter à sa base une collerette circulaire s'étendant dans un plan perpendiculaire à l'axe du bouton et formant une butée à la bordure inférieure de l'oeillet, collerette sur laquelle ladite au moins une nervure est assise. La collerette associée aux nervures constitue ainsi une structure renforcée et une barrière de plus contre toute tentative d'incision entre l'étiquette et le bouton. Dans ce cas, de préférence, l'oeillet recouvre au moins partiellement la collerette et ladite au moins une nervure.

Selon une autre caractéristique de la boucle auriculaire selon l'invention, le bouton comporte à sa base un épaulement formant un contrefort circulaire sur lequel ladite au moins une nervure est adossée. L'épaisseur augmentée ainsi créée vient renforcer encore la solidité de la base du bouton et sa résistance à une éventuelle agression.

Selon un mode de réalisation particulier de la boucle auriculaire selon l'invention, l'oeillet comporte une lèvre circulaire recouvrant partiellement l'épaulement formant le contrefort du bouton.

Selon un autre mode de réalisation intéressant de la boucle auriculaire selon l'invention, le bouton est en matière plastique dure et l'étiquette est en matière plastique souple. Comme déjà indiqué l'utilisation de matériaux de couleurs différentes permet un contrôle visuel instantané de l'état de la boucle.

Toute tentative pour séparer le corps du bouton du reste du dispositif en particulier de l'étiquette avec son oeillet, afin de falsifier ladite étiquette avant de la replacer, se heurte ainsi à la difficulté de pratiquer une incision autour du bouton sans dégrader les éléments voisins et sans laisse de traces apparentes. Les nervures de renfort selon l'invention permettent d'accroître cette difficulté de sorte que la fraude sera toujours repérée, à moins que l'effet dissuasif n'ait opéré préventivement.

D'autres avantages et caractéristiques de l'invention apparaîtront à la lecture de la description ci-après d'une forme de réalisation donnée à titre d'exemple non limitatif, illustrée par les dessins joints dans lesquels :

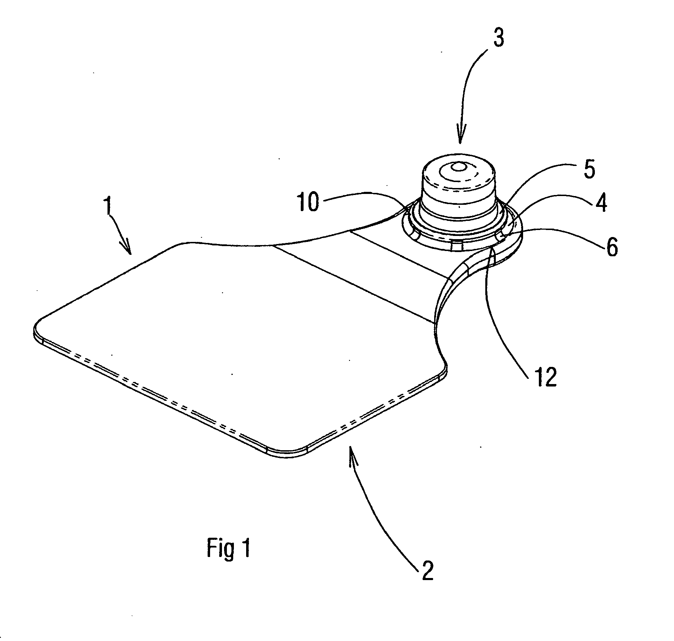

- la figure 1 est une vue en perspective d'une boucle auriculaire selon l'invention représentant l'assemblage d'un bouton et d'un étiquette,

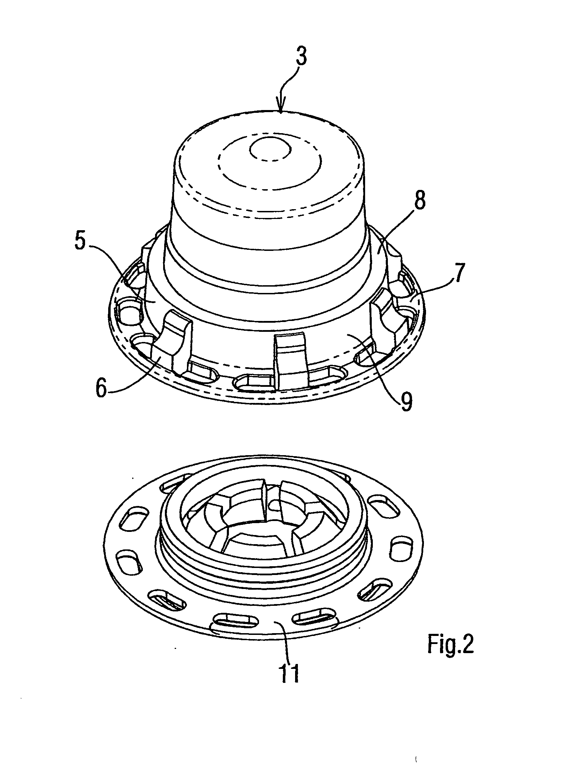

- la figure 2 est une vue éclatée en perspective du bouton et du ressort associé,

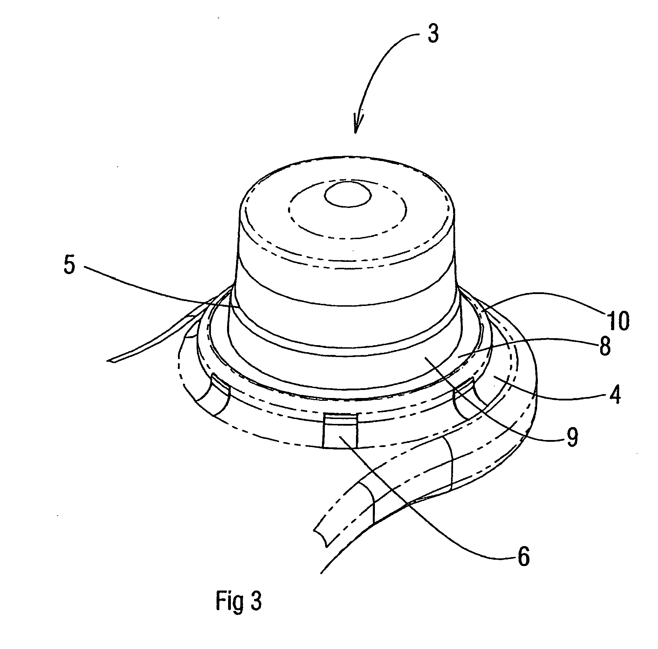

- la figure 3 est une vue partielle en perspective de boucle auriculaire telle que représentée en figure 1.

La boucle auriculaire selon l'invention est constitué d'une partie mâle (non représentée) et d'une partie femelle comprenant l'étiquette 2 et le bouton 3. Le ressort 11, placé sous le bouton 3 facilite la pénétration et le blocage de la partie mâle dans la cavité centrale du bouton. L'étiquette 2 est une plaquette sur laquelle sont mentionnées toutes les données légales. Elle comporte un percement formant l'oeillet 4, recevant le bouton 3.

Celui-ci est tronconique, légèrement plus évasé à sa base. II est assujetti à l'oeillet 4 ménagé dans l'étiquette 2, de sorte que la base 5 du bouton est en butée sur la bordure interne de l'oeillet. La base du bouton comporte la collerette circulaire 7 perpendiculaire à l'axe du bouton 3, sur laquelle l'oeillet 4 vient aussi en butée sur sa bordure inférieure. Les surfaces en contact adoptent une forme complémentaire qui permet d'une part leur assemblage et d'autre part une fixation efficace. Leur fixation a été ici assurée par un soudage par ultrasons.

La boucle comporte à la base 5 du bouton 3, une pluralité de nervures 6 de renfort, dans le cas d'espèce huit nervures. Les nervures 6 sont disposées longitudinalement par rapport à l'axe du bouton 3, et selon une symétrie de révolution par rapport à l'axe dudit bouton. Elles s'étendent dans l'épaisseur de l'oeillet 4 avec une hauteur égale à l'épaisseur de l'oeillet 4 de l'étiquette 2, de sorte qu'elles affleurent avec le même galbe que l'oeillet dans leur partie supérieure, sans dépasser du plan de l'étiquette 2. Elles sont ainsi entièrement intégrées et ne créent aucune aspérité indésirable à la surface de l'étiquette. On comprend aisément que l'oeillet 4 présente au niveau de chaque nervure 6 une fenêtre 12 laissant apparaître celle-ci. Les nervures 6 sont ainsi partiellement visibles lorsque l'étiquette est en place, et ce d'autant que les nervures 6 et l'étiquette 2 sont fabriquées dans des matériaux de couleurs différentes. Les nervures 6 et le bouton 3 sont aussi réalisés dans des teintes différentes, ce qu'autorise aisément la technique de surmoulage.

Dans la boucle auriculaire telle que représentée ici, la collerette circulaire 7 à la base du bouton 3 constitue une butée pour la bordure inférieure de l'oeillet 2. Elle constitue également une assise pour les nervures 6, cette association renforçant encore de dispositif contre toute tentative d'incision entre l'étiquette et le bouton. Dans le cas présent, l'oeillet 2 recouvre totalement la collerette 7 et en partie les nervures 6.

Selon une autre caractéristique de la boucle auriculaire selon l'invention, le bouton 3 comporte à sa base l'épaulement 8 formant le contrefort circulaire 9, sur lequel les nervures 6 sont adossées. L'épaisseur ainsi créée accroît la solidité du bouton et sa résistance à une éventuelle agression. L'oeillet 4 comporte la lèvre circulaire 10 qui recouvre partiellement l'épaulement 8 du bouton 3.

Les trois pièces qui viennent d'être décrites en détail, à savoir l'étiquette 2, le bouton 3 et le ressort 11, sont montés ensemble lors de la fabrication et constituent la partie femelle complète d'un boucle auriculaire selon l'invention. Il est bien entendu qu'une telle boucle peut incorporer d'autres caractéristiques visant à apporter différents avantages complémentaires à l'utilisateur.

## Revendications

1. Boucle auriculaire de marquage et d'identification du bétail en matière plastique, du type associant une partie mâle et une partie femelle, celle-ci comprenant une étiquette (2) et un bouton (3) essentiellement cylindrique ou tronconique, ledit bouton étant assujetti à un oeillet (4) ménagé dans ladite étiquette de sorte que la base (5) du bouton est en butée sur la bordure de l'oeillet, les surfaces en contact adoptant une forme complémentaire, ladite boucle étant **caractérisée en ce que** la base (5) du bouton (3) comporte au moins une nervure (6) de renfort.

2. Boucle auriculaire selon la revendication 1, **caractérisée en ce que** ladite au moins une nervure (6) de renfort est disposée longitudinalement par rapport à l'axe du bouton (3).

3. Boucle auriculaire selon l'une quelconque des revendications 1 ou 2, **caractérisée en ce que** la base (5) du bouton (3) comporte une pluralité de nervures (6) de renfort disposées selon une symétrie de révolution par rapport à l'axe dudit bouton.

4. Boucle auriculaire selon l'une des revendications précédentes, **caractérisée en ce que** ladite au moins une nervure (6) a une hauteur inférieure ou égale à l'épaisseur de l'oeillet (4) de l'étiquette (2).

5. Boucle auriculaire selon l'une des revendications précédentes, **caractérisée en ce que** ladite au moins une nervure (6) s'étend dans l'épaisseur de l'oeillet (4) de sorte qu'elle affleure en partie au moins à la surface de celui-ci.

6. Boucle auriculaire selon l'une quelconque des revendications précédentes, **caractérisée en ce que** le bouton (3) comporte à sa base (5) une collerette circulaire (7) s'étendant dans un plan perpendiculaire à l'axe dudit bouton et formant une butée à la bordure inférieure de l'oeillet (4), collerette sur laquelle ladite au moins une nervure (6) est assise.

7. Boucle auriculaire selon la revendication précédente, **caractérisée en ce que** l'oeillet (4) recouvre au moins partiellement la collerette (7) et ladite au moins une nervure (6).

8. Boucle auriculaire selon l'une quelconque des revendications précédentes, **caractérisée en ce que** le bouton (3) comporte à sa base (5) un épaulement (8) formant un contrefort circulaire (9) sur lequel ladite au moins une nervure (6) est adossée.

9. Boucle auriculaire selon la revendication précédente, **caractérisée en ce que** l'oeillet (4) comporte une lèvre circulaire (10) recouvrant partiellement l'épaulement (8) formant le contrefort (9) du bouton (3).

10. Boucle auriculaire selon l'une quelconque des revendications précédentes, **caractérisée en ce que** le bouton (3) est en matière plastique dure et l'étiquette (2) est en matière plastique souple.

11. Boucle auriculaire selon l'une quelconque des revendications précédentes, **caractérisée en ce que** ladite au moins une nervure (6) et l'étiquette (2) sont de couleurs différentes.

## Patentansprüche

1. Ohrmarke zur Kennzeichnung und Identifikation von Vieh aus Kunststoff, die einen Einsteck- und einen Aufnahmeteil verbindet, wobei dieser ein Etikett (2) und einen im Wesentlichen zylindrischen oder kegelstumpfartigen Knopf (3) umfasst, wobei der Knopf einer Öse (4), die in dem Etikett ausgenommen ist, unterliegt, so dass die Basis (5) des Knopfes am Rand der Öse zum Anschlag gelangt, wobei die in Kontakt befindlichen Flächen eine komplementäre Form haben, wobei die Ohrmarke **dadurch gekennzeichnet ist, dass** die Basis (5) des Knopfes (3) mindestens eine Verstärkungsrippe (6) umfasst.

2. Ohrmarke nach Anspruch 1, **dadurch gekennzeichnet, dass** die mindestens eine Verstärkungsrippe (6) längs in Bezug zur Achse des Knopfes (3) angeordnet ist.

3. Ohrmarke nach einem der Ansprüche 1 oder 2, **dadurch gekennzeichnet, dass** die Basis (5) des Knopfes (3) eine Vielzahl von Verstärkungsrippen (6) umfasst, die nach einer Umdrehungssymmetrie in Bezug zur Achse des Knopfes angeordnet sind.

4. Ohrmarke nach einem der vorhergehenden Ansprüche, **dadurch gekennzeichnet, dass** die mindestens eine Rippe (6) eine Höhe kleiner oder gleich der Dicke der Öse (4) des Etiketts (2) hat.

5. Ohrmarke nach einem der vorhergehenden Ansprüche, **dadurch gekennzeichnet, dass** sich die mindestens eine Rippe (6) in der Dicke der Öse (4) erstreckt, so dass sie mindestens teilweise an die Oberfläche derselben grenzt.

6. Ohrmarke nach einem der vorhergehenden Ansprüche, **dadurch gekennzeichnet, dass** der Knopf (3) an seiner Basis (5) einen kreisförmigen Kragen (7) umfasst, der sich in einer Ebene senkrecht auf die Achse des Knopfes erstreckt und einen Anschlag an den unteren Rand der Öse (4) bildet, wobei auf den Kragen die mindestens eine Rippe (6) aufgesetzt ist.

7. Ohrmarke nach dem vorhergehenden Anspruch, **dadurch gekennzeichnet, dass** die Öse (4) zumindest teilweise den Kragen (7) und die mindestens eine Rippe (6) bedeckt.

8. Ohrmarke nach einem der vorhergehenden Ansprüche, **dadurch gekennzeichnet, dass** der Knopf (3) an seiner Basis (5) einen Absatz (8) umfasst, der eine kreisförmige Gegenverstärkung (9) bildet, an der die mindestens eine Rippe (6) anliegt.

9. Ohrmarke nach dem vorhergehenden Anspruch, **dadurch gekennzeichnet, dass** die Öse (4) eine kreisförmige Lippe (10) umfasst, die teilweise den Absatz (8), der die Gegenverstärkung (9) des Knopfes (3) bildet, bedeckt.

10. Ohrmarke nach einem der vorhergehenden Ansprüche, **dadurch gekennzeichnet, dass** der Knopf (3) aus hartem Kunststoff ist und das Etikett (2) aus weichem Kunststoff ist.

11. Ohrmarke nach einem der vorhergehenden Ansprüche, **dadurch gekennzeichnet, dass** die mindestens eine Rippe (6) und das Etikett (2) unterschiedliche Farben haben.

## Claims

1. Plastics ear tag for marking and identifying livestock, of the type in which a male part and a female part are joined together, said ear tag comprising a label (2) and a substantially cylindrical or frustoconical button (3), said button being secured to an eyelet (4) provided in said label such that the base (5) of the button abuts the rim of the eyelet, the contacting surfaces taking on complementary shapes, said tag being **characterized in that** the base (5) of the button (3) has at least one reinforcing rib (6).

2. Ear tag according to Claim 1, **characterized in that** said at least one reinforcing rib (6) is disposed longitudinally with respect to the axis of the button (3).

3. Ear tag according to either of Claims 1 and 2, **characterized in that** the base (5) of the button (3) has a plurality of reinforcing ribs (6) disposed in a rotationally symmetrical manner with respect to the axis of said button.

4. Ear tag according to one of the preceding claims, **characterized in that** said at least one rib (6) has a height less than or equal to the thickness of the eyelet (4) in the label (2).

5. Ear tag according to one of the preceding claims, **characterized in that** said at least one rib (6) extends through the thickness of the eyelet (4) such that it is at least partially flush with the surface thereof.

6. Ear tag according to any one of the preceding claims, **characterized in that** the button (3) has at its base (5) a circular flange (7) that extends in a plane perpendicular to the axis of said button and forms a stop at the lower rim of the eyelet (4), said at least one rib (6) being seated on said flange.

7. Ear tag according to the preceding claim, **characterized in that** the eyelet (4) at least partially covers the flange (7) and said at least one rib (6).

8. Ear tag according to any one of the preceding claims, **characterized in that** the button (3) has at its base (5) a shoulder (8) that forms a circular abutment (9) against which said at least one rib (6) rests.

9. Ear tag according to the preceding claim, **characterized in that** the eyelet (4) has a circular lip (10) that partially covers the shoulder (8) forming the abutment (9) of the button (3).

10. Ear tag according to any one of the preceding claims, **characterized in that** the button (3) is made of hard plastics material and the label (2) is made of soft plastics material.

11. Ear tag according to any one of the preceding claims, **characterized in that** said at least one rib (6) and the label (2) are different colours.
